# EUROPEAN PATENT SPECIFICATION

(11) **EP 1 305 506 B1**
(45) Date of publication and mention of the grant of the patent: **02.06.2004**
(21) Application number: 01984431.5
(22) Date of filing: 26.07.2001
(51) Int. Cl.: F02B 39/10, F02B 37/16

(54) **INTERNAL COMBUSTION ENGINE SUPERCHARGER**
BRENNKRAFTMASCHINENLADER
COMPRESSEUR D'ALIMENTATION DE MOTEUR A COMBUSTION INTERNE

(30) Priority: 28.07.2000 GB 0018428; 28.09.2000 GB 0023771; 05.02.2001 GB 0102815
(43) Date of publication of application: 02.05.2003
(73) Proprietor: Visteon Global Technologies, Inc., Dearborn, Michigan 48126-2490 (US); Visteon UK Limited, Laindon, Essex SS15 6TD (GB)
(72) Inventor: CRIDDLE, Mark, Anderton, Chelmsford Essex CM2 9TY (GB); MORRIS, Guy, David, South Woodham Ferrers Essex CM3 5ZG (GB); NEW, John, Charles, Basildon Essex SS15 5GR (GB); PETROVITCH, Simon, Ditton Fields Cambridge CB5 8QJ (GB); WINTLE, Peter, Austen, Hertfordshire CM23 5LS (GB)
(74) Representative: McLean, Robert Andreas
(86) International application number: PCT/GB2001/003377
(87) International publication number: WO 2002/010565

(56) References cited:
- EP-A- 0 312 107
- US-A- 4 350 135
- US-A- 6 062 026
- US-A- 6 141 695

## Description

The present invention relates to a supercharger for an internal combustion engine.

An internal combustion engine according to the preamble of claim 1 is known from EP 0 312 107 A.

There are many factors that characterize the torque output of any given internal combustion engine, for example the swept volume within cylinders, cylinder configuration, the bore-to-stroke ratio, the compression ratio, valve train arrangement, and the inlet and exhaust arrangement.

Engine developers are constantly "tuning" engines, that is, adjusting these parameters and others in the search for improved fuel economy and performance. However, this does not necessarily result in increased power or torque as perceived by the driver. In real world driving conditions it is engine torque that is most important to the driver's perception of performance (or performance feel), and particularly engine torque delivered at lower engine speeds (rpm), for example, below 3500 rpm for a typical light duty passenger car application.

For this reason, an engine may need to be tuned to give higher torque at lower rpm, but this will typically result in a loss of torque at higher engine speed, for example an engine speed that is above about 3500 rpm. This is particularly a problem with small capacity gasoline engines, prevalent in the European marketplace.

The same engine could easily be 're-tuned' to deliver the same torque but at much higher crank speeds. This results in significantly higher peak power but at the expense of torque at lower rpm. Whilst this will appeal to the 'sporting' driver, acceleration performance is reduced at lower engine speeds.

Engine designers have employed a multitude of techniques and technologies in an attempt to overcome this traditional compromise. Examples of such systems are variable geometry intake systems, variable camshaft timing and variable valve lift and timing. All of these approaches are designed to maintain more than one 'state of tune' depending on operating conditions.

Another commonly used technique is to reject engine tuning as a method for increased performance and instead pump air into the engine by means of a turbocharger or supercharger. Such forced induction generally results in significant increases in torque and power.

However, some types of turbochargers and superchargers (referred to collectively herein as "compressors") can add significantly to the cost of an engine, which is a particular barrier to using a compressor with smaller capacity engines in an economy car. Since turbochargers are driven by exhaust gasses, these are most useful at high engine rpm, and so do not in themselves help solve the problem of low rpm torque.

The term "supercharger" is used herein to refer to compressors which are not driven entirely by exhaust gasses. Usually, superchargers are driven by a mechanical arrangement, for example a belt drive linked to the engine crankshaft. Such a mechanical arrangement is, however, relatively expensive and bulky to implement, and does not afford easy control of the supercharger speed by an engine management system.

Electrically driven superchargers are also known, but these consume a large amount of electrical current. As a result, such electrically driven superchargers have not been used widely in production motor vehicles, particularly motor cars.

Although an air compressor can significantly boost the available maximum engine torque, this will usually be at a cost of decreased fuel economy. This, together with the inherent expense of conventional compressor arrangements, ahs meant that such compressors are usually only available with expensive or high performance motor vehicles.

It is an object of the present invention to provide a compact and economical internal combustion engine compressor that addresses these issues, and which is particularly useful with smaller capacity engines.

According to the invention, there is provided an internal combustion engine, comprising: one or more combustion chambers; an air inlet for aspirating the combustion chambers; a throttle in the air inlet that can be set to regulate the aspiration of the combustion chambers; a fuel delivery system for supplying fuel to the combustion chambers; an air compressor in the air inlet for assisting aspiration of the combustion chambers and hence engine torque output by compressing air in the air inlet, a compressor driver for supplying power to run the air compressor; and an engine management system for controlling engine torque output in response to an engine torque demand; the engine being tuned to produce its peak torque with natural aspiration alone at a peak torque engine speed which is above an idle speed and below a maximum rated engine speed;
the compressor driver including an electric motor under the control of said engine management system;
characterised in that:
the engine management system is responsive to torque demand and engine speed to selectively run the engine in one of a plurality of operating modes, including:
a) a naturally aspirated mode available at any engine speed in which the air compressor is effectively disabled and the engine management system controls engine torque by adjusting the throttle setting; and
b) a torque enhanced mode available only when the engine speed is below a predetermined engine speed N and engine torque demand cannot be met using natural aspiration, in which the throttle setting is held at a maximum setting and the engine management system controls said electric motor to provide assisted aspiration at a level needed for the engine to achieve the demanded torque, N being at or near the peak engine torque engine speed for the engine in naturally aspirated mode.

The peak torque with assisted aspiration may then be both higher and achieved at a lower engine speed than naturally aspirated peak torque.

In a preferred embodiment of the invention, the speed at which the engine torque output with natural aspiration alone peaks, is a moderately high engine speed. This is particularly advantageous in a small capacity engine for a motor car, which can then be tuned for higher maximum torque output at moderate and/or moderately high engine speeds, at the expense of maximum torque output at low engine speeds. The torque boost provided by the compressor is then available below high engine speeds, particularly at low and moderate engine speeds, whenever the driver torque demand exceeds that available at wide open throttle.

The engine is therefore operated in a fuel-efficient manner when the engine torque demand is below the maximum available when naturally aspirated. When the engine torque demand is at or above this level, the throttle setting will be a maximum setting, and the compressor is activated and controlled in such a such a way that the engine torque output is controlled not by the changing the setting of the throttle, but at least in part. by controlling the amount of compressed air aspirated into the combustion chambers. The fuel supply will also normally be controlled in conjunction with the air supply.

Fuel efficiency is improved and battery/alternator power consumption is reduced because the compressor is enabled only after the engine torque demand has closely approached or reached the maximum un-boosted engine torque output at that engine speed.

The compressor is then driven when the engine torque demand cannot be met by natural aspiration alone and deactivated when the engine torque demand can be met by natural aspiration alone.

The engine aspiration then is normal when the compressor is not enabled.

The engine may comprise an air by-pass across the compressor. The amount of compressed air may then be controlled at least in part by controlling the amount of air by-passing the compressor. It will, however, be advantageous to control the air primarily via the amount of electrical power supplied to the electric motor, in order to help minimise the amount of electric power consumed by the electric motor. This is particularly important when the engine has a charging system which is not capable of continuously supplying the electric motor with electric power, as will be the case unless expensive modifications are made to the vehicle charging system and to its storage battery.

Additionally or alternatively, the compressor may include adjustable aerodynamic features, such as adjustable impeller vanes. The amount of compressed air may then be controlled by adjusting the aerodynamic features to control the amount of air compressed by the compressor.

In a preferred embodiment of the invention, the compressor driver is capable of driving the compressor over a range of compressor speeds, the amount of air aspirated into the combustion chambers being dependent on the compressor speed.

Since the compressor driver is an electrically driven motor, the power and hence speed of such an electric motor can readily be controlled by suitable control electronics, giving precise and sufficiently rapid control of the output torque beyond that achievable with natural aspiration alone.

The engine will normally include a fuel delivery system by which the amount of fuel entering the combustion chambers may be controlled. The engine torque output will then depend at least in part on the amount of fuel delivered to the combustion chambers. A sensor can then be provided to detect the composition of exhaust gasses from the combustion chambers. This is useful, because the engine management system can then be arranged to control the fuel delivery system, dependent on an output received from the sensor indicative of the exhaust gas composition. The engine management system is then responsive to the sensed exhaust gas composition to control the amount of compressed air and/or the amount of delivered fuel.

The internal combustion engine may be a reciprocating internal combustion engine. In the context of the present invention, the term "moderate" as, regards engine speed, means an engine speed at or near the mid-range of engine speeds, between an idle engine speed and a maximum rated engine speed. Preferably, the engine is tuned so that the moderate speed extends across an upper half of the engine speed range.

Preferably, the engine is tuned to optimize torque in an upper end of the moderate engine speed in the absence of the compressor boost, even if this means a loss in engine torque at moderate or low engine speeds. The compressor boost may then be employed solely at such moderate and low engine speeds in order to provide additional engine power and torque at those engine speeds.

The engine controller enables use of the compressor driver when the engine speed is relatively low or moderate and disables use of the compressor when engine speed is relatively high. This avoids excessive demands on the power supply to the electric motor.

we have found that the electric motor and its power supply and controls are a critical factor in the successful operation of an engine embodying the invention. In order to provide the rapid response to an increase of driver torque demand (accelerator pedal depression) the motor must be capable of accelerating quickly up to the required speed which may be 70,00,0 rpm or higher. This requires low inertia of the motor components and high currents (particularly if the engine installation requires a 12 volt DC system). Compact components with high current densities create heat management and durability issues.

If the engine is a reciprocating piston engine in a motor car, then the moderate speed is preferably at least about 3500 rpm, and may be as high as about 5500 rpm. This permits the engine, particularly if it is relatively small capacity engine of less than about 1.8 litres capacity, to be tuned to provide its maximum torque in the region of about 5500 rpm, which is a relatively high speed for such an engine. This will help to provide good part load fuel economy through the installation of a smaller capacity engine. The consequent decrease in torque at lower rpm would be noticed by the driver even during moderate driving, particularly when the driver needs to accelerate quickly at lower rpm, however, the lower torque can be boosted by use of the compressor. Because the compressor is not allowed to work at relatively high rpm, fuel economy at such speeds is preserved and excessive current drain is avoided. The invention also provides the benefit of not increasing the maximum vehicle speed since it does not increase peak engine power output, which for most types of vehicle in most countries is in any event normally well in excess of national speed limits. This provides a safety benefit, and may give the vehicle a lower insurance rating, particularly for younger drivers. At the same time, the invention provides good acceleration at lower engine speeds, which in many circumstances can be a safety feature.

When the engine is of the reciprocating type, the engine will have a number of intake/outlet valves arranged to operate at predetermined times in the engine cycle. Because of the performance boost provided by the compressor, it is therefore possible for the timing of the valve operation to be fixed. This helps avoid unnecessary cost in construction and maintenance of the engine.

In general, it is desirable if the engine management system provides a transition mode in which use of the compressor is progressively disabled in the region of peak torque with natural aspiration alone. This vicinity may include a region of engine speed slightly above the moderate speed. The engine management system may, in fact, disable any use of the compressor above the moderate engine speed, but preferably the disabling of the compressor use is substantially below the high engine speed.

Another way of expressing this is to say that the compressor torque boost does not significantly increase the engine power output above the moderate engine speed.

Also according to the invention, there is provided a motor vehicle, comprising an accelerator pedal movable by the driver, and an internal combustion engine, wherein the internal combustion engine is as described above as being according to the invention, the engine torque demand being set at least in part by the position of the accelerator pedal.

The invention also provides a method of operating an internal combustion engine, the engine comprising: one or more combustion chambers; an air inlet for aspirating the combustion chambers; a throttle in the air inlet that can be set to regulate the aspiration of the combustion chambers; a fuel delivery system for supplying fuel to the combustion chambers; an air compressor in the air inlet for assisting aspiration of the combustion chambers and hence engine torque output by compressing air in the air inlet, a compressor driver for supplying power to run the air compressor; and an engine management system for controlling engine torque output in response to an engine torque demand, the engine being tuned to produce its peak torque with natural aspiration alone at a peak torque engine speed which is above an idle speed and below a maximum rated engine speed; the method comprising the steps of :
i) providing an electric motor to power the compressor;
   characterised by
ii) using the engine management system to selectively run the engine in one of a plurality of operating modes in response to torque demand and engine speed, including:
   a) a naturally aspirated mode available at any engine speed in which the air compressor is effectively disabled and the engine management system controls engine torque by adjusting the throttle setting; and
   b) a torque enhanced mode available only when the engine speed is below a predetermined engine speed N and engine torque demand cannot be met using natural aspiration, in which the throttle setting is held at a maximum setting and the engine management system controls said electric motor to provide assisted aspiration at a level needed for the engine to achieve the demanded torque, N being at or near the peak engine torque engine speed for the engine in naturally aspirated mode.

The invention will now be described by way of example, with reference to the accompanying drawings, in which:
Figure 1 is a schematic diagram of a motor vehicle having a 1.4 litre, four cylinder engine system with an air intake apparatus that includes an electrically powered intake compressor, according to the invention;
Figure 2 is a graph plotting engine torque against engine speed for the 1.4 litre engine of Figure 1 when naturally aspirated, tuned either for maximum torque at a low moderate engine speed, or maximum engine torque at a higher moderate engine speed;
Figure 3 is a graph similar to that of Figure 2, showing also the effect on engine torque output with the engine of Figure 1 when using the intake compressor;
Figure 4 is a graph plotting engine compressor torque boost against driver throttle engine demand for the engine of Figure 1;
Figure 5 is a graph of compressor demand against driver throttle angle demand for the engine of Figure 1;
Figure 6 is a perspective view of the air intake apparatus used with the engine of Figure 1;
Figure 7 is an exploded view of a housing and internal components that form the air intake apparatus of Figure 6;
Figure 8 is a top plan view of the air intake apparatus of Figure 7, showing two separate removable access panels on upper surfaces of the housing;
Figure 9 is a top plan view of the air intake apparatus similar to that of Figure 8, but with the two access panels removed, and no components within the housing;
Figure 10 is a perspective view of the empty housing of Figure 9;
Figure 11 is a perspective view of a portion of the housing, with an access panel removed to show the compressor within the housing, and an air outlet pipe from the compressor extending through an air diffuser chamber to an air outlet from the housing;
Figure 12 is a different perspective view of the portion of the housing shown in Figure 11, looking into the air outlet to show the arrangement of the air outlet pipe with respect to the air outlet and the diffuser chamber;
Figure 13 is a perspective view from underneath of a portion of a dividing plate that covers the air compressor and air diffuser chamber of Figures 11 and 12, showing an air flap valve in the diffuser plate in a closed position; and
Figure 14 is a perspective view similar to that of Figure 13, with the air flap valve removed to show an air grille through the dividing plate by which bypass air flows into the diffuser chamber to the housing air outlet.

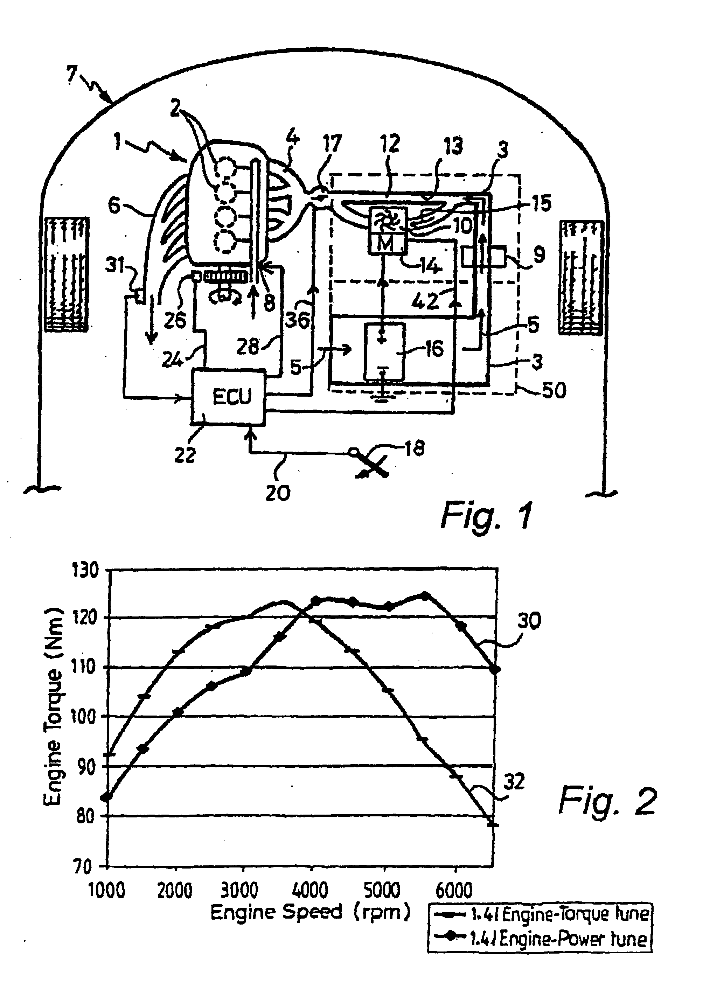

Figure 1 shows schematically part of a motor vehicle 7 having a supercharged reciprocating piston internal combustion engine 1, with four in-line cylinders 2, an air inlet manifold 4 and an exhaust manifold 6 leading to and from each of the cylinders 2, and a fuel injection system 8 for supplying fuel to cylinders 2 in a manner well-known in the art. A compressor, here an electrically driven supercharger 10, is provided upstream of the inlet manifold 4.

Air flows to the inlet manifold 4 through the supercharger 10 when this is operational, or when the supercharger is disabled, through an air bypass conduit 12 in parallel with the supercharger 10. Air is supplied to the supercharger 10 and/or the bypass 12 along an inlet air path 3.

The air bypass conduit 12 has an air valve 13 that automatically opens to permit inlet air 5 to bypass the supercharger when the supercharger airflow 15 is insufficient to charge the engine cylinders 2 with air.
The air supply to the engine 1 is then controlled by the setting of a throttle valve 17 downstream of the supercharger 10 and bypass 12, and the activation of the supercharger 10. When the supercharger 10 is not activated, the engine 1 is normally aspirated, and when the supercharger 10 is activated, the airflow to the engine is increased.

The supercharger is driven only by a switched reluctance electrical motor (M) 14 powered by a 12-volt lead/acid vehicle battery 16 and a belt-driven alternator (not shown). The battery has a current rating which is about 30 A higher than would normally be specified for a mass-market four cylinder engine motor car. In addition to powering the supercharger, the battery 16 also provides for the vehicle starting, lighting and ignition requirements. As indicated by Figure 1, the battery 16 also lies within the air supply path 3, so that inlet air flows around the battery 16.

An air filter 9 is provided in the air supply path 3 downstream of the battery 16 and upstream of the supercharger 10 and air bypass 12.

As will be explained in more detail below, the battery 16, filter 9, supercharger 10 and air bypass 12 are all housed within a hollow enclosure 50.

The vehicle driver (not shown) can control the engine power via a movable accelerator pedal assembly 18, that provides an electrical signal 20 to an engine control unit (ECU) 22. The engine control unit receives a number of input signals indicative of engine and vehicle operating parameters, including an engine speed signal 24 from an engine speed sensor 26. The engine control unit 22 calculates an engine torque demand from the various input signals, and provides a number of output signals to control various vehicle and engine operating parameters, including a fuel injection control signal 28, throttle valve control signal 36 and a supercharger motor control signal 42. The engine torque demand is therefore set at least in part by the position of the accelerator pedal.

As will be explained in more detail below, when the driver moves the accelerator pedal to demand engine torque in excess of that which can be delivered by the engine 1 when naturally aspirated, the throttle valve 17 moves to a maximum setting to admit the maximum volume of air into the cylinders, and engine control unit 22 then activates the supercharger motor 14 under certain moderate or low engine speeds, but not at high engine speeds. Thereafter, the boosted engine torque output is controlled by the supercharger speed and the amount of fuel supplied to the cylinders. If the engine is an injection engine, the engine control unit 22 can control the amount of injected fuel by electrical control of the injectors.

Preferably, the engine includes an exhaust gas sensor 31 for monitoring engine combustion conditions. The sensor 31 may be an exhaust gas oxygen (EGO) sensor. This can be used to determine if the engine is running lean or rich. The engine control unit 22 first sets both the supercharger speed and delivered fuel amount according to the current torque demand. The engine control unit monitors the output from the sensor 31, and then adjusts the supercharger speed and/or the amount of delivered fuel to achieve an appropriate level of rich or lean engine operation.

Figure 2 shows a graph of engine torque against engine speed for a conventional four-cylinder in-line engine, such as that described above, but without supercharging. As can be seen from curve 30 of Figure 2, the engine can be tuned to provide good power at moderately high engine speeds ("power tune"), but at the expense of low-end torque.

Alternatively, as shown by curve 32, the engine can be tuned to give good torque at low and moderate engine speeds ("torque tune"), but at the expense of top-end power. Whilst "power tune" will appeal to the 'sporting' driver, it will result in lower levels of satisfaction for the majority of car owners. The requirement to deliver good real world 'performance feel' commonly results in an engine torque output as shown in the "torque tune" curve, where torque at high engine speeds has been compromised in order to promote torque output below 3500 rpm. Although engine gearing can be selected to minimize undesirable characteristics, in practice conventional engines are tuned to achieve a compromise.

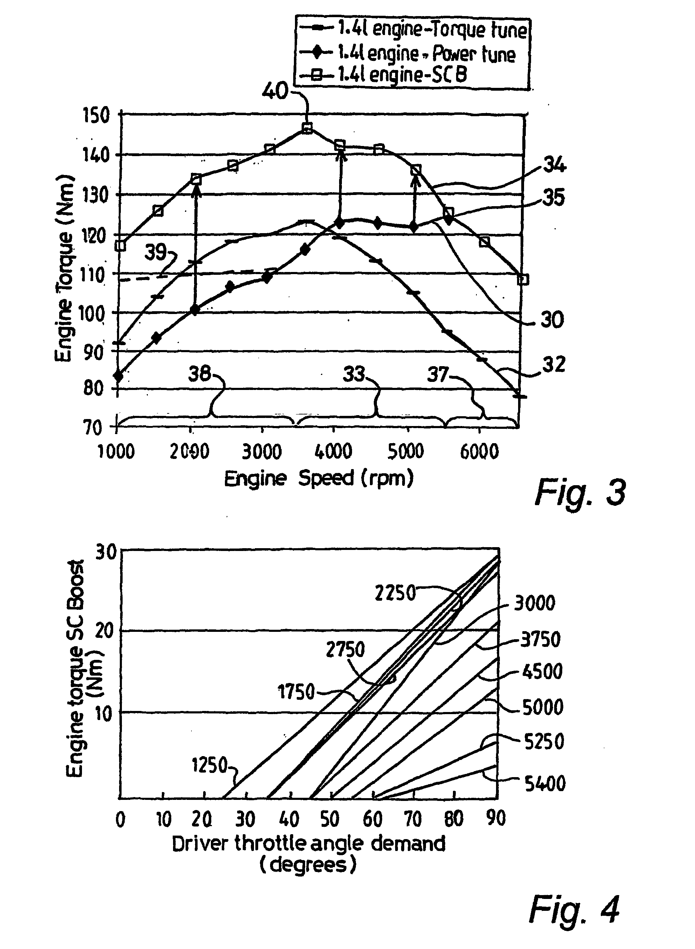

With reference to Figure 3, in the preferred embodiment of the invention, a relatively low capacity engine, for example below about 1.8 litres capacity, is tuned to give good power at high rpm, at the expense of torque at low engine speed, as illustrated by curve 30. This has the secondary effect of allowing good fuel economy at steady highway cruising speeds through the need to use wider throttle openings to achieve cruising speed. As can be seen from curve 34, an increase in maximum engine torque is then provided with a supercharger torque boost (or equivalently engine power boost) when the driver demands power in excess of that available from a naturally aspirated engine, as shown by the curve with supercharger boost "SCB". The boost is made available under control of the engine control unit 22 only in a region of low 38 and moderate engine speeds 33, and is progressively limited to transition smoothly into engine power at point 35 without compressor torque boost in a region of higher engine speeds 37. This is done by progressively limiting the maximum allowable supercharger boost proximate a transition point 40, which in this example is taken at the maximum un-boosted engine torque. It is, however, possible to deviate either above or below this point, although a deviation too far below this point (in this example below about 3500 rpm) reduces the potential benefits provided by the supercharger, and a deviation too far above this point (in this example above about 5750 rpm) will lead to excess torque in a region of engine operation where this is not needed under most driving conditions, or desired from the point of view of fuel economy.

Thus, the engine controller enables use of the compressor driver only in such a way that the engine torque output with the compressor torque boost peaks in the region of moderate engine speed.

The boosted torque curve could, however, transition smoothly into the un-boosted torque curve 30 in a region of lower engine speeds 38, as shown by dashed line 39.

Figure 4 shows a graph of engine torque supercharger boost against driver throttle angle demand between 0° and 90°. The diagonal straight lines on the graph are labelled with engine speed in rpm, between 1250 rpm and 5400 rpm. The vertical scale corresponds between the difference in engine torque in Figure 3 between the boosted torque curve 34 and the un-boosted torque curve 30. At the maximum throttle angle 90°, the engine torque supercharger boost is the maximum value shown in Figure 3. As throttle angle demands declines from 90°, so does the engine torque supercharger boost, until this declines to zero boost 'corresponding to curve 30 of Figure 3.

As can be seen from Figure 4, as the engine speed increases towards the transition point 35 of Figure 3, the slope of the engine torque supercharger boost curve declines, until at the transition point 35, there is no engine torque supercharger boost. This shows graphically the progressive disabling of the supercharger boost.

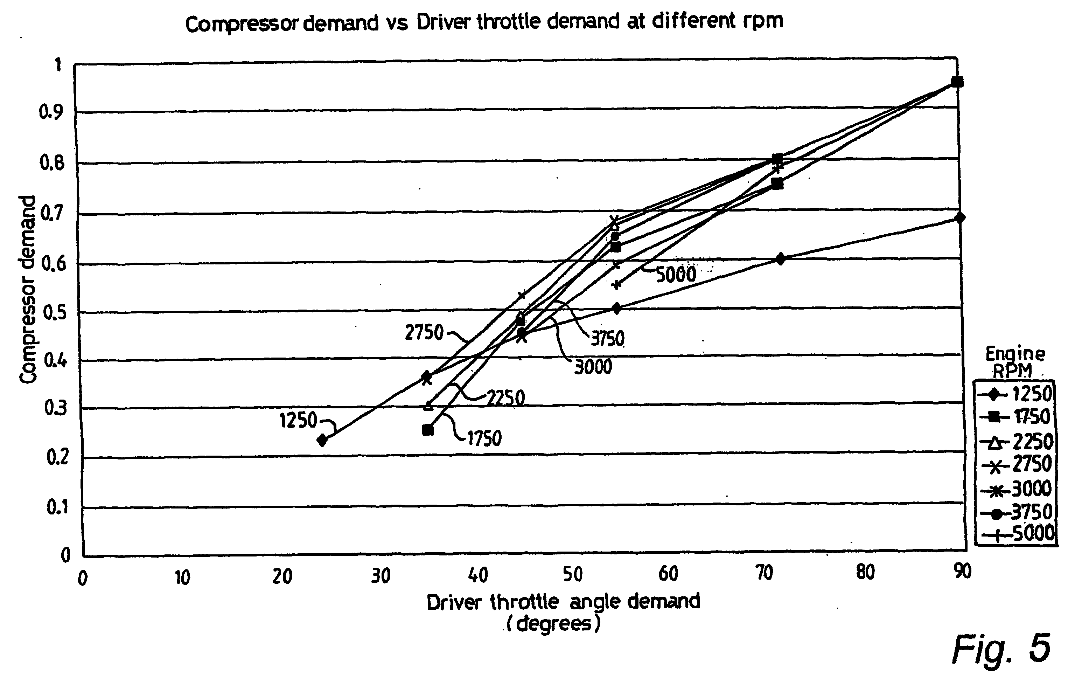

Figure 5 shows the operation of the supercharger in another way, with compressor demand plotted against driver "throttle angle" demand between 0° and 90°. Except at high engine speeds when operation of the supercharger is disabled, the driver "throttle angle" does not correspond with the actual angle of the throttle 17. At engine speeds where supercharger operation is permitted, the actual throttle angle will reach 90° (i.e. the maximum setting) before the driver "throttle angle" reaches 90°. Thereafter, as driver throttle angle increases towards 90°, the actual throttle angle remains at the maximum setting, and the boosted engine torque output is controlled by the amount of electrical power supplied to the supercharger motor, in conjunction with an appropriate amount of fuel delivered to the cylinders.

The various lines in Figure 5 are labelled with the engine speed in rpm. The compressor demand is equivalent to the electrical power supplied to the supercharger motor 14.
The plots begin at a compressor demand at about 0.2, at which point the air supplied by the supercharger begins to have an appreciable effect on engine torque. As can be seen from Figure 5, as engine speed increases, so does the minimum compressor demand needed to appreciably boost torque. This is due to the increased air flow to the inlet manifold 4 as engine speed increases.

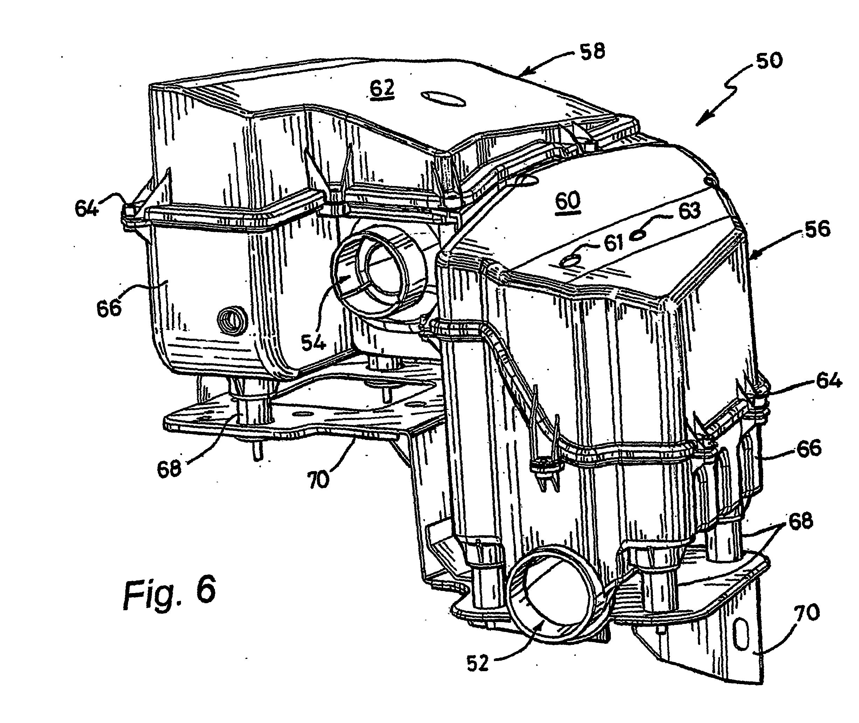

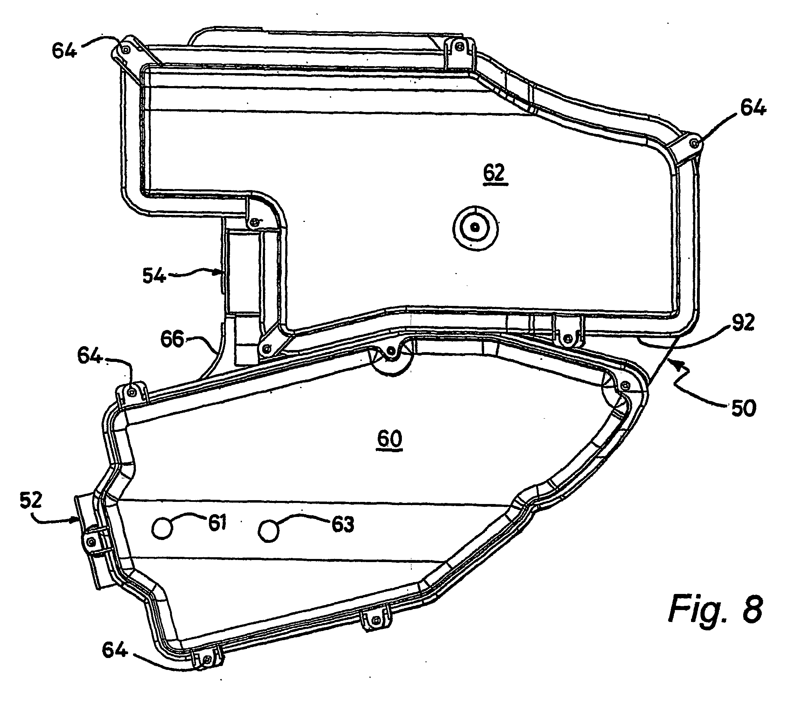

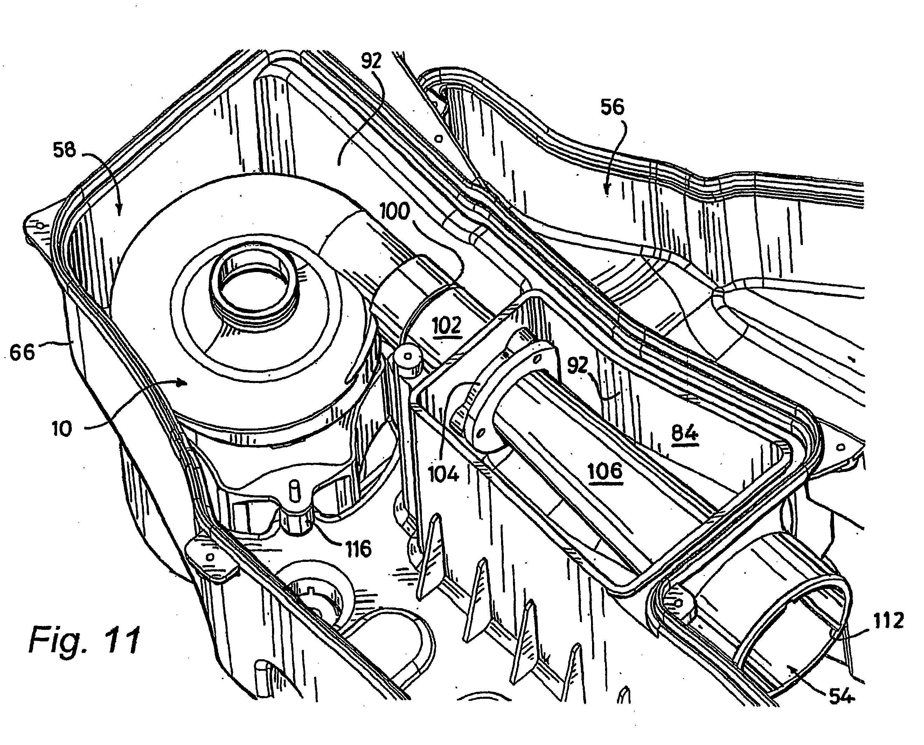

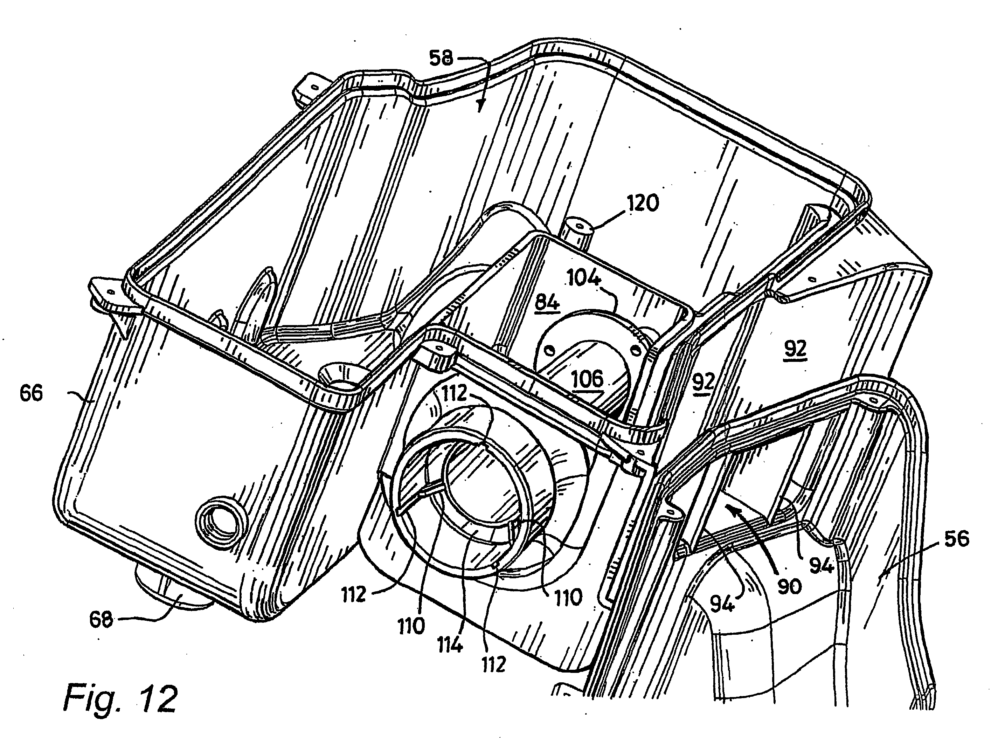

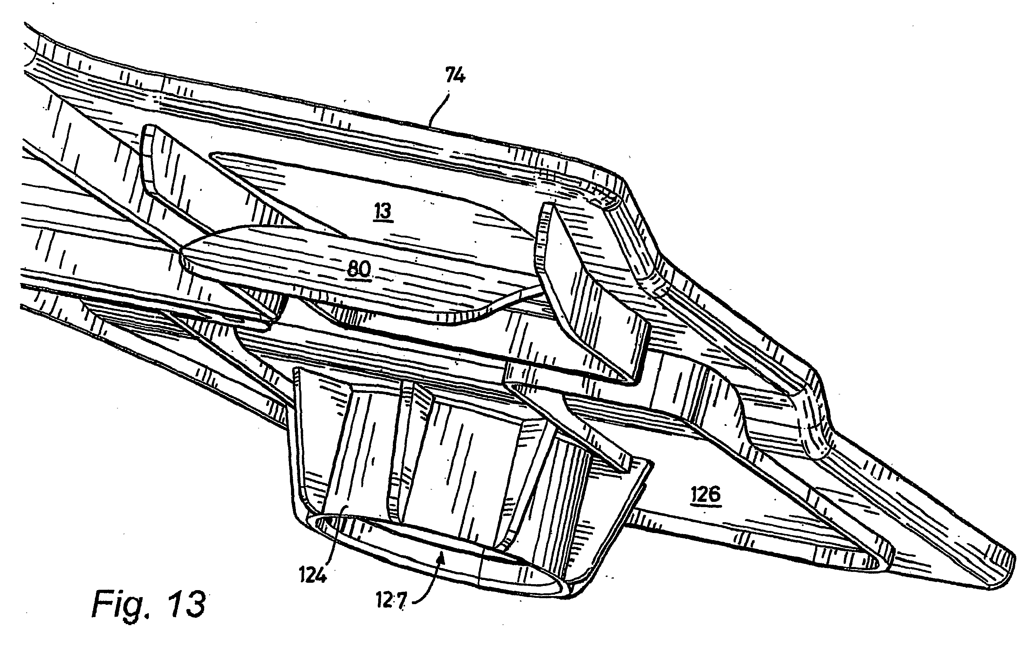

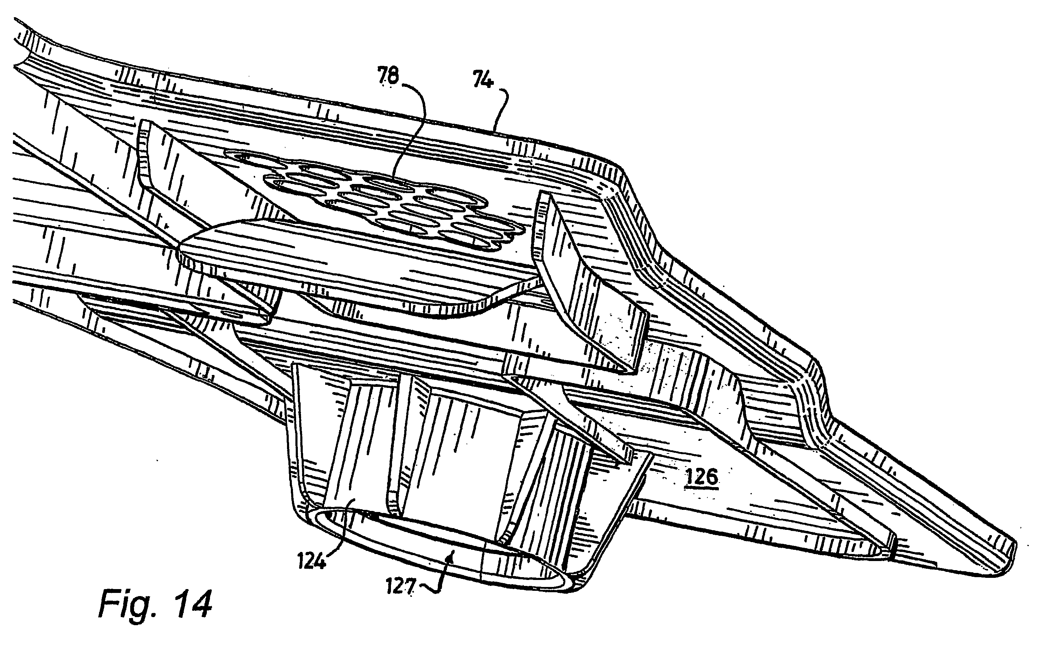

Figures 6 to 14 all show detailed views of the air intake apparatus according to the invention. Figure 6 shows an external perspective view of the unitary housing 50 that holds the battery 16, filter 9, compressor 10 and air bypass 12. The air supply path 3 through the unitary housing 50 begins at an air inlet 52 in a lower portion of the housing 50, and terminates at an air outlet 54 at a higher level in the housing 50.

The housing 50 includes the battery compartment 56 and the supercharger compartment 58. Each compartment 56,58 has a corresponding access panel 60,62 which is removably attached by screws 64 to a unitary housing base 66 that forms a lower part of the enclosure 50.

The battery compartment access panel 60 has a pair of apertures 61,63, by which a pair of battery terminals 65,67 can protrude through the housing 50 when the battery access panel is affixed to the housing base 66.

The unitary housing base 66 is mounted at a number of supports 68 extending downwards from the housing base 66 to a steel mounting plate 70, which is itself bolted to an inner surface of an engine compartment (not shown).

The hollow enclosure 50 is formed from a moulded plastics material, for example ABS, or glass-filled nylon.

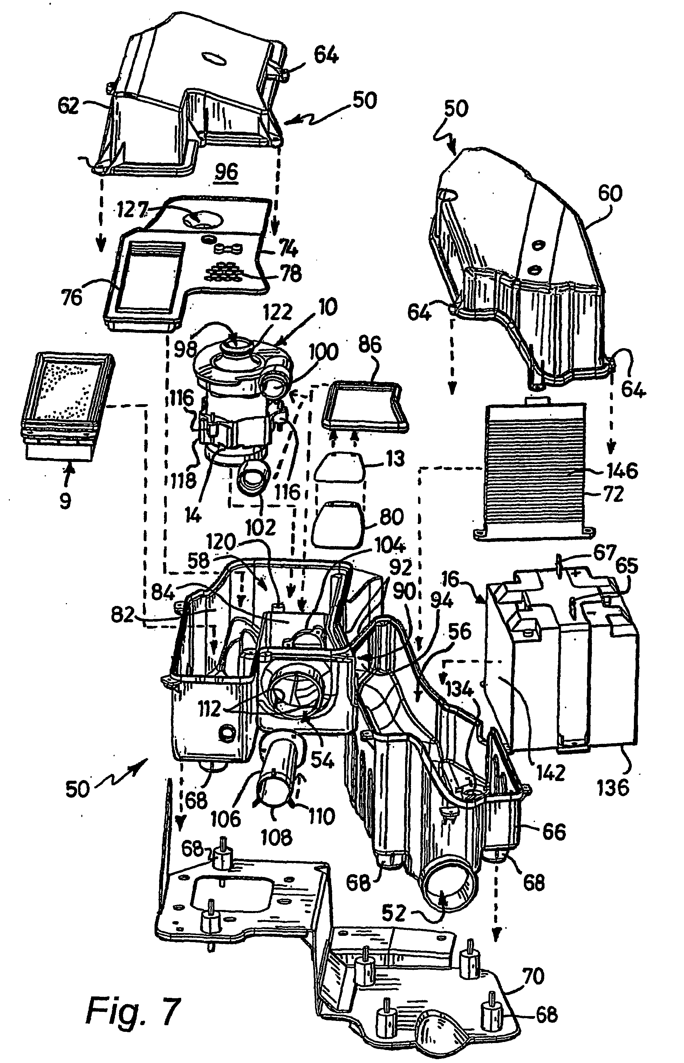

Figure 7 shows the mounting plate, hollow enclosure 50 and a number of components inside the enclosure 50 in an exploded, perspective, view. The battery 16 is housed within the battery compartment 56, together with _supercharger drive electronics 72.

The supercharger compartment 58 contains a larger number of components, including the filter 9, supercharger 10 and supercharger motor 14. Also in the supercharger compartment 58 are the dividing plate 74 that extends horizontally across an approportion of the supercharger compartment 58 beneath the supercharger access cover 62, and the flap air bypass valve 13. The air filter 9 has a rectangular outline, and sits within a similar rectangular recess 56 within the dividing plate 74. The dividing plate 74 has an air grill 78 to the underside of which is attached the air flap 13, and a curved plate 80 to limit the deflection of the air flap 13 away from the grill 78.

The supercharger compartment 58 is divided into a main portion 82, which houses the compressor 10, motor 14 and air filter 9, and a minor portion 84, which is referred to herein as a diffuser chamber 84. The dividing plate air grill 78, and air flap 13 lie over the diffuser chamber 74, with a flexible seal 86 making an air-tight seal between the diffuser chamber 84 and dividing plate 74.

The air supply path 3 between the air inlet 52 and air outlet 54 extends around the battery 16 and supercharger power electronics 72 within the battery compartment 56, through an aperture 90 in a partition wall 92 that separates the battery compartment 56 from the supercharger compartment 58. As can be seen from Figure 7, the air aperture 90 is at a higher level in the battery compartment 56 from the air inlet 52. The air supply path through the battery compartment 56 therefore generally rises towards the air aperture 90.

The air aperture 90 has a number of vanes, one of which 94 is visible in Figure 7. These vanes 94 direct the air flow into a lower portion of the supercharger compartment 58, in the vicinity of the supercharger motor 14. The air supply path therefore helps cool the supercharger motor 14 when this is operational. The air supply path 3 after flowing around the supercharger motor 14 rises vertically upwards through the air filter 9 in the dividing plate 74 into an air volume between the dividing plate 74 and supercharger access panel 62. In Figure 7, this enclosed air volume is indicated generally by reference numeral 96.

When the supercharger is not operational, the air section provided from the inlet manifold 4 holds the flap valve 13 downwards onto the flap valve limiting plate 80, so that air can flow through the air grill 78 in the dividing plate 74, and into the diffuser chamber 84. From the diffuser chamber 84, the air is then free to pass into the air outlet 54. Although not shown, the air path then follows a conventional flexible hose to the throttle valve 17.

When the supercharger is operational, some air from the enclosed air volume 96 will be drawn into an inlet 98 in an upper central portion of the supercharger 10. The supercharger air is then compressed and expelled at up to 40% above atmospheric pressure through the supercharger outlet 100. A small rubber ring 102 connects the supercharger air outlet 100 to an inlet 104 to the diffuser chamber 84.

Until the supercharger 10 is operating at a high capacity, there will be some air also entering through the air flap 13 into the diffuser chamber 84. The air expelled by the supercharger 10 through the diffuser chamber air inlet 104 passes into a diffuser pipe 106 that tapers gradually outwards to a diffuser pipe outlet 108. The diffuser pipe outlet 108 has three radial fins 110 equilaterally spaced around the circumference around the space of the diffuser pipe outlet 108. The fins 110 slot into corresponding grooves 112 on inner surfaces of the air outlet 54 so that an annular gap 114 is maintained between the air diffuser pipe 106 and air outlet 54.

The air expelled by the supercharger 110 is therefore kept separate from air entering through the flap valve 13 into the diffuser chamber 84 until this air mixes downstream of the annular gap 114 surrounding the diffuser pipe outlet 108.

It has been found that the air flow efficiency is increased by this arrangement, as energy in the air expelled by the supercharger 10 helps to pull air out of the diffuser chamber 84 supplied through the air flap valve 13.

In order to dampen noise and vibration, the supercharger 10 and its motor 14 are physically mounted through three rubber posts 116 spaced equidistantly around a cup-shaped aluminium mounting bracket 118 to which the supercharger 10 has been rigidly mounted. The three rubber mounts 116 sit on three corresponding posts 120 extending upwards from a lower portion of the supercharger compartment 58. These three rubber mounts 116, together with the flexible short outlet hose 102 between the supercharger outlet 100 and diffuser chain inlet 104, dampen down any vibration which might be transmitted from the supercharger 10 and its motor 14 through to the body of the unitary housing 66.

The supercharger 10 is also vibrationally isolated from the dividing plate 74 by a rubber ring 122 that extends around the circumference of the supercharger air inlet 98. The rubber ring 122 sits within a circular boss 124 that extends downwards from an undersurface 126 of the dividing plate 74. The boss 124 has a passage 127 therethrough to allow air to flow through the dividing plate 74 into the supercharger 10.

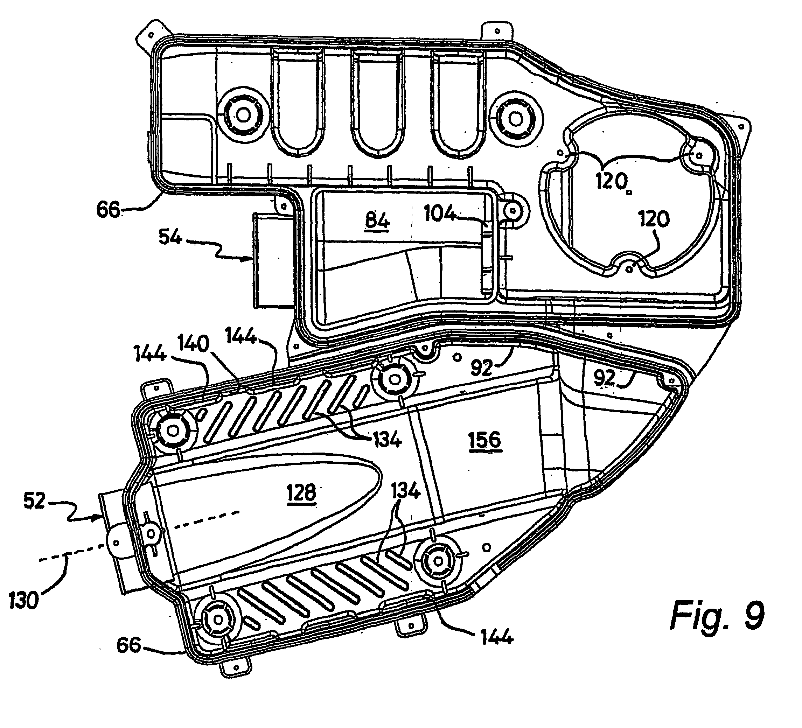

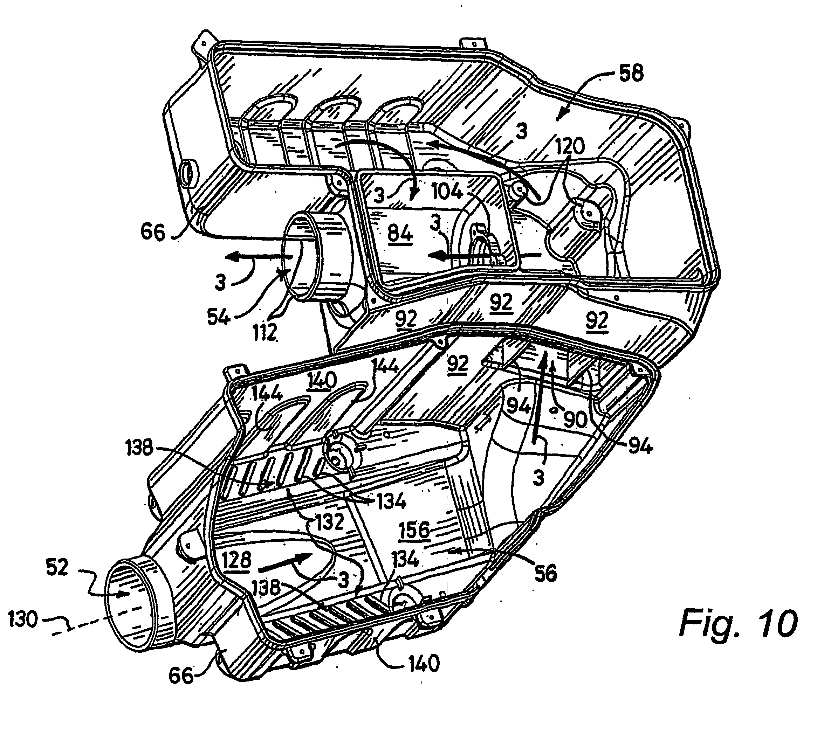

Referring now to Figures 9 and 10, these show how the air inlet path 3 extends into the battery compartment 56 initially in a recess 128 in a lower surface 156 of the battery compartment 56. The recess 128 gradually disappears downstream of the air inlet 52, thereby forcing inlet air to move laterally away from an axis 130 of the air inlet 52 towards lateral side portions 132 of the battery compartment 56, where there are a number of upstanding ribs 134 projecting from the side portions 132. The ribs 134 support an undersurface 136 of the battery 16, so that air channels 138 extend between the ribs 134 laterally away from the air inlet axis 130. Inlet air is therefore directed across nearly the full undersurface of the battery, which helps to keep the battery cool. Once the inlet air reaches lateral side walls 140 of the battery compartment 56, the air is directed to flow upwards over corresponding vertically extending sides 142 of the battery 16 by vertically extending ribs 144 that project laterally inwards from the battery housing vertical side walls 140. The vertical ribs 144 also help to locate the battery 16 transversely within the battery compartment 56.

Some air will, however, flow downstream of the battery 16 at a lower level to encounter the supercharger power electronics 72, which is provided with metallic heat dissipation fins 146.

The temperature of the inlet air therefore increases as it passes through the battery compartment 56, but the air is still cool compared with the temperatures that may be reached by the supercharger motor 14 (and significantly cooler than the air temperatures that would be encountered in a turbocharged or positive displacement supercharger system). This therefore provides an efficient means of cooling the various components within the housing 50.

The invention aims to combine the benefits of both engine tuning and forced induction in order to achieve both good low rpm torque and high rpm power. The given engine is deliberately tuned in order to achieve a high power output at the expense of low rpm torque. An electrically driven compressor is integrated into the air induction system of the engine and is energized under the control of the engine management system to increase torque output when required.

The characteristics of the electrically driven compressor will in general be such that prolonged operation (e.g. achieving maximum vehicle speed) is not possible without discharging the battery or overloading/overheating the electric motor.

The use of a switched reluctance motor is preferred over a permanent magnet motor, even though in broad terms both types of motor can both be developed to produce similar performance for a given size and weight. In a switched reluctance motor, the rotor is constructed from a stack of profiled steel laminations. When the magnetic field is generated by the stator coils the rotor turns to align itself such that the profile of the laminations presents the path of least reluctance to the magnetic field. By switching the stator coils it is possible to generate a 'rotating' magnetic field in which the rotor will spin.

A switched reluctance motor does not have magnets which can become demagnetised at high operating temperatures. In addition, the steel laminations can easily tolerate the high forces encountered at high motor speeds.

During steady state operation of the supercharger, the electrical power consumption is 2.2 kW, or 185 A at 12 V.

However, during acceleration of the device from idle to its maximum speed of 70,000 rpm, current consumption can reach 375 A for brief periods. If such operation is sustained for more than 30 s, or continuously at more than about 15 % duty cycle, then the battery will be discharged, or the supercharger motor will overheat. The fact that the supercharger is not available at high engine speeds, or when the throttle valve is not open, negates these issues, as well as maintaining good fuel economy at driving conditions where supercharger operation is not needed for improved performance, or desirable from a safety point of view. Also, by reducing the electrical power consumption in this way, the invention avoids the need for a more expensive and bulky mechanical drive of the supercharger, for example using a belt driven drive from the engine. The result is that the engine can be tuned to achieve not only the peak power associated with the high power 'tune' but also achieves increases in low/mid rpm torque that only forced induction could normally achieve.

The invention therefore provides an internal combustion engine with compact and economical compressor that is electrically driven in such a way that it can be used with a conventional motor vehicle charging system, and which is particularly useful with smaller capacity engines that otherwise have only modest maximum available torque at low and medium engine speeds.

## Claims

1. An internal combustion, engine (1), comprising: one or more combustion chambers (2); an air inlet (3) for aspirating the combustion chambers (2); a throttle (17) in the air inlet (3) that can be set to regulate the aspiration of the combustion chambers (2); a fuel delivery system (8) for supplying fuel to the combustion chambers (2); an air compressor (10) in the air inlet (3) for assisting aspiration of the combustion chambers (2) and hence engine torque output by compressing air in the air inlet (3), a compressor driver (14) for supplying power to run the air compressor (10); and an engine management system (22) for controlling engine torque output in response to an engine torque demand, the engine being tuned to produce its peak torque with natural aspiration alone at a peak torque engine speed (35) which is above an idle speed and below a maximum rated engine speed;
the compressor driver including an electric motor (14) under the control of said engine management system (22);
**characterised in that**:
the engine management system (22) is responsive to torque demand and engine speed to selectively run the engine in one of a plurality of operating modes, including:
a) a naturally aspirated mode available at any engine speed (33,37,38) in which the air compressor (10) is effectively disabled and the engine management system (22) controls engine torque by adjusting the throttle (17) setting; and
b) a torque enhanced mode available only when the engine speed is below a predetermined engine speed N (37) and engine torque demand cannot be met using natural aspiration, in which the throttle (17) setting is held at a maximum setting and the engine management system (22) controls said electric motor (14) to provide assisted aspiration at a level needed for the engine to achieve the demanded torque, N being at or near the peak engine torque engine speed (35) for the engine in naturally aspirated mode.

2. An internal combustion engine (1) as claimed in Claim 1, in which peak torque (40) with assisted aspiration is both higher and is achieved at a lower engine speed than naturally aspirated peak torque (35).

3. An internal combustion engine as claimed in Claim 1 or Claim 2, in which said peak torque engine speed is in an upper half of the engine speed range.

4. An internal combustion engine (1) as claimed in any preceding claim, in which: the engine torque output depends at least in part on the amount of fuel delivered to the combustion chambers (2); a sensor (31) is arranged to detect the composition of exhaust gasses from the combustion chambers (2); the engine management system (22) is arranged to control the fuel delivery system (8), and receives an output from the sensor (31) indicative of the exhaust gas composition; the engine management system (22) being responsive to the sensed exhaust gas composition to control the amount of compressed air and/or the amount of delivered fuel.

5. An internal combustion engine (1) as claimed in any preceding claim, in which the engine is a reciprocating piston engine, and the peak torque engine speed (35) is at least about 3500 rpm.

6. An internal combustion engine (1) as claimed in any preceding claim, in which, the capacity of the combustion chambers (2) is below about 1.8 litres.

7. An internal combustion engine (1) as claimed in any preceding claim, in which the engine management system (22) progressively disables use of the compressor (10) in the region of engine speeds at which torque with natural aspiration alone peaks.

8. An internal combustion engine (1) as claimed in any preceding claim, in which the maximum engine torque output with the compressor (10) enabled transitions smoothly (34) into the naturally aspirated maximum engine torque output towards higher engine speeds.

9. An internal combustion engine (1) as claimed in any preceding claim, in which the electric motor is a switched reluctance motor (14).

10. An internal combustion engine (1) as claimed in any preceding claim, in which the engine comprises an air by-pass (13) across the compressor (10) and the amount of compressed air supplied to the combustion chambers (2) is controlled at least in part by controlling the amount of air by-passing the compressor (10).

11. An internal combustion engine (1) as claimed in any preceding claim, in which the amount of compressed air supplied to the combustion chambers (2) is controlled via the amount of electrical power supplied to the electric motor (14).

12. An internal combustion engine (1) as claimed in any preceding claim, in which the compressor (10) includes, adjustable impeller vanes, the impeller vanes being adjustable to maintain the efficiency of the compressor operation under differing air flow conditions.

13. A motor vehicle, comprising an accelerator pedal (18) movable by the vehicle driver, and an internal combustion engine (1), wherein the internal combustion engine (1) is as claimed in any preceding claim, the engine torque demand being set at least in part by the position of the accelerator pedal (is).

14. A method of operating an internal combustion engine, the engine (1) comprising: one or more combustion chambers (2); an air inlet (3) for aspirating the combustion chambers (2); a throttle (17) in the air inlet (3) that can be set to regulate the aspiration of the combustion chambers (2); a fuel delivery system (8) for supplying fuel to the combustion chambers (2); an air compressor (10) in the air inlet (3) for assisting aspiration of the combustion chambers (2) and hence engine torque output by compressing air in the air inlet (3), a compressor driver (14) for supplying power to run the air compressor (10); and an engine management system (22) for controlling engine torque output in response to an engine torque demand, the engine being tuned to produce its peak torque with natural aspiration alone at a peak torque engine speed (35) which is above an idle speed and below a maximum rated engine speed; the method comprising the steps of:
i) providing an electric motor (14) to power the compressor (10);
**characterised by**
ii) using the engine management system (22) to selectively run the engine in one of a plurality of operating modes in response to torque demand and engine speed, including:
a) a naturally aspirated mode available at any engine speed in which the air compressor (10) is effectively disabled and the engine management system (22) controls engine torque by adjusting the throttle (17) setting; and
b) a torque enhanced mode available only when the engine speed is below a predetermined engine speed N and engine torque demand cannot be met using natural aspiration, in which the throttle (17) setting is held at a maximum setting and the engine management system (22) controls said electric motor (14) to provide assisted aspiration at a level needed for the engine to achieve the demanded torque, N being at or near the peak engine torque engine speed (35) for the engine in naturally aspirated mode.

## Patentansprüche

1. Verbrennungsmotor (1), umfassend: eine oder mehr Verbrennungskammem (2); einen Lufteinlass (3) für die Ansaugung in die Verbrennungskammern (2); eine Drosselklappe (17) in dem Lufteinlass (3), die zur Regulierung der Ansaugung in die Verbrennungskammern (2) eingestellt werden kann; ein Kraftstoffabgabesystem (8) zum Zuleiten von Kraftstoff zu den Verbrennungskammern (2); einen Luftverdichter (10) im Lufteinlass (3) zur Unterstützung der Ansaugung in die Verbrennungskammern (2) und somit des Motordrehmomentausganges durch Verdichten von Luft in dem Lufteinlass (3); einen Verdichterantrieb (14) zum Zuführen von Energie zum Betreiben des Luftverdichters (10); und ein Motorsteuersystem (22) zum Steuern des Motordrehmomentausganges abhängig von einem Motordrehmomentbedarf; wobei der Motor so eingestellt ist, dass er sein Spitzendrehmoment nur mit Selbstansaugung bei einer Spitzendrehmoment-Motordrehzahl (35) erzeugt, die über einer Leerlaufdrehzahl und unter einer maximalen Nennmotordrehzahl liegt, wobei der Verdichterantrieb einen Elektromotor (14) unter der Steuerung des Motorsteuersystems (22) enthält;
**dadurch gekennzeichnet, dass** das Motorsteuersystem (22) auf den Drehmomentbedarf und die Motordrehzahl anspricht, um den Motor selektiv in einem von mehreren Betriebsmoden zu betreiben, umfassend:
a) einen Selbstansaugungsmodus, der bei jeder Motordrehzahl (33, 37, 38) verfügbar ist, in dem der Luftverdichter (10) effektiv abgeschaltet ist und das Motorsteuersystem (22) das Motordrehmoment durch Anpassung der Drosselklappeneinstellung (17) steuert; und
b) einen drehmomentverstärkten Modus, der nur verfügbar ist, wenn die Motordrehzahl unter einer vorbestimmten Motordrehzahl N (37) liegt und der Motordrehmomentbedarf unter Verwendung der Selbstansaugung nicht erfüllt werden kann, wobei die Drosselklappeneinstellung (17) bei einer maximalen Einstellung gehalten wird und das Motorsteuersystem (22) den Elektromotor (14) steuert, um ein unterstütztes Ansaugen bei einem Wert bereitzustellen, der notwendig ist, damit der Motor das erforderliche Drehmoment erreicht, wobei N bei oder nahe bei der Spitzenmotordrehmoment-Motordrehzahl (35) für den Motor im Selbstansaugungsmodus liegt.

2. Verbrennungsmotor (1) nach Anspruch 1, wobei das Spitzendrehmoment (40) mit unterstützter Ansaugung sowohl höher ist als auch bei einer geringeren Motordrehzahl erreicht wird als ein selbstangesaugtes Spitzendrehmoment (35).

3. Verbrennungsmotor nach Anspruch 1 oder Anspruch 2, wobei die Spitzendrehmoment-Motordrehzahl in einer oberen Hälfte des Motordrehzahlbereichs liegt.

4. Verbrennungsmotor (1) nach einem der vorangehenden Ansprüche, wobei der Motordrehmomentausgang wenigstens teilweise von der Kraftstoffmenge abhängig ist, die an die Verbrennungskammern (2) abgegeben wird; ein Sensor (31) zum Erfassen der Zusammensetzung der Abgase von den Verbrennungskammern (2) angeordnet ist; das Motorsteuersystem (22) zum Steuern des Kraftstoffabgabesystems (8) angeordnet ist und einen Ausgang von dem Sensor (31) empfängt, der die Abgaszusammensetzung anzeigt; wobei das Motorsteuersystem (22) auf die erfasste Abgaszusammensetzung anspricht, um die Menge an verdichteter Luft und/oder die Menge an abgegebenem Kraftstoff zu steuern.

5. Verbrennungsmotor (1) nach einem der vorangehenden Ansprüche, wobei der Motor ein Hubkolbenmotor ist und die Spitzendrehmoment-Motordrehzahl (35) wenigstens etwa 3500 U/min ist.

6. Verbrennungsmotor (1) nach einem der vorangehenden Ansprüche, wobei die Kapazität der Verbrennungskammern (2) unter etwa 1,8. Liter liegt.

7. Verbrennungsmotor (1) nach einem der vorangehenden Ansprüche, wobei das Motorsteuersystem (22) progressiv die Verwendung des Verdichters (10) in dem Bereich von Motordrehzahlen sperrt, bei welchen das Drehmoment nur mit Selbstansaugung einen Spitzenwert erreicht.

8. Verbrennungsmotor (1) nach einem der vorangehenden Ansprüche, wobei der maximale Motordrehmomentausgang bei aktiviertem Verdichter (10) sanft in den selbstangesaugten maximalen Motordrehmomentausgang zu höheren Motordrehzahlen übergeht (34).

9. Verbrennungsmotor (1) nach einem der vorangehenden Ansprüche, wobei der Elektromotor ein geschalteter Reluktanzmotor (14) ist.

10. Verbrennungsmotor (1) nach einem der vorangehenden Ansprüche, wobei der Motor eine Luftumleitung (13) über den Verdichter (10) umfasst und die Menge an verdichteter Luft, die den Verbrennungskammern (2) zugeführt wird, wenigstens teilweise durch Steuern der Menge an Luft gesteuert wird, die den Verdichter (10) umgeht.

11. Verbrennungsmotor (1) nach einem der vorangehenden Ansprüche, wobei die Menge an verdichteter Luft, die den Verbrennungskammem (2) zugeführt wird, über die Menge an elektrischem Strom gesteuert wird, die dem Elektromotor (14) zugeführt wird.

12. Verbrennungsmotor (1) nach einem der vorangehenden Ansprüche, wobei der Verdichter (10) einstellbare Laufradflügel enthält, wobei die Laufradflügel einstellbar sind, um die Effizienz des Verdichterbetriebs unter unterschiedlichen Luftstrombedingungen aufrechtzuerhalten.

13. Kraftfahrzeug, umfassend ein Gaspedal (18), das vom Fahrzeuglenker bewegbar ist, und einen Verbrennungsmotor (1), wobei der Verbrennungsmotor (1) wie in einem der vorangehenden Ansprüche beansprucht ist, wobei der Motordrehmomentbedarf wenigstens teilweise durch die Position des Gaspedals (18) eingestellt wird.

14. Verfahren zum Betreiben eines Verbrennungsmotors, wobei der Motor (1) umfasst: eine oder mehr Verbrennungskammern (2); einen Lufteinlass (3) für die Ansaugung in die Verbrennungskammern (2); eine Drosselklappe (17) in dem Lufteinlass (3), die zur Regulierung der Ansaugung in die Verbrennungskammern (2) eingestellt werden kann; ein Kraftstoffabgabesystem (8) zum Zuleiten von Kraftstoff zu den Verbrennungskammern (2); einen Luftverdichter (10) im Lufteinlass (3) zur Unterstützung der Ansaugung in die Verbrennungskammern (2) und somit des Motordrehmomentausganges durch Verdichten von Luft in dem Lufteinlass (3); einen Verdichterantrieb (14) zum Zuführen von Energie zum Betreiben des Luftverdichters (10); und ein Motorsteuersystem (22) zum Steuern des Motordrehmomentausganges abhängig von einem Motordrehmomentbedarf; wobei der Motor so eingestellt ist, dass er sein Spitzendrehmoment nur mit Selbstansaugung bei einer Spitzendrehmoment-Motordrehzahl (35) erzeugt, die über einer Leerlaufdrehzahl und unter einer maximalen Nennmotordrehzahl liegt, wobei das Verfahren die folgenden Schritte umfasst:
i) Bereitstellen eines Elektromotors (14) zum Antreiben des Verdichters (10);
**gekennzeichnet durch**
ii) Verwenden des Motorsteuersystems (22) zum selektiven Betreiben des Motors in einem von mehreren Betriebsmoden als Reaktion auf einen Drehmomentbedarf und eine Motordrehzahl, umfassend:
a) einen Selbstansaugungsmodus, der bei jeder Motordrehzahl verfügbar ist, in dem der Luftverdichter (10) effektiv abgeschaltet ist und das Motorsteuersystem (22) das Motordrehmoment **durch** Anpassung der Drosselklappeneinstellung (17) steuert; und
b) einen drehmomentverstärkten Modus, der nur verfügbar ist, wenn die Motordrehzahl unter einer vorbestimmten Motordrehzahl N liegt und der Motordrehmomentbedarf unter Verwendung der Selbstansaugung nicht erfüllt werden kann, wobei die Drosselklappeneinstellung (17) bei einer maximalen Einstellung gehalten wird und das Motorsteuersystem (22) den Elektromotor (14) steuert, um ein unterstütztes Ansaugen bei einem Wert bereitzustellen, der notwendig ist, damit der Motor das erforderliche Drehmoment erreicht, wobei N bei oder nahe bei der Spitzenmotordrehmoment-Motordrehzahl (35) für den Motor im Selbstansaugungsmodus liegt.

## Revendications

1. Moteur à combustion interne (1) comprenant : une ou plusieurs chambres de combustion (2), un orifice d'entrée d'air (3) destiné à l'aspiration dans les chambres de combustion (2), un papillon des gaz (17) dans l'orifice d'entrée d'air (3) qui peut être réglé pour réguler l'aspiration des ou dans les chambres de combustion (2), un système de délivrance de carburant (8) destiné à fournir du carburant aux chambres de combustion (2), un compresseur d'air (10) dans l'orifice d'entrée d'air (3) afin d'aider à l'aspiration des chambres de combustion (2), et donc la production du couple moteur en comprimant de l'air dans l'orifice d'entrée d'air (3), un dispositif d'entraînement de compresseur (14) destiné à fournir de la puissance pour faire fonctionner le compresseur d'air (10), et un système de gestion de moteur (22) destiné à commander la production du couple moteur en réponse à une demande de couple moteur, le moteur étant réglé pour produire son couple de pointe avec une aspiration naturelle seule à un régime moteur de couple de pointe (35) qui est au-dessus d'un régime de ralenti et en dessous d'un régime nominal maximum du moteur,
le dispositif d'entraînement de compresseur comprenant un moteur électrique (14) sous la commande dudit système de gestion de moteur (22),
**caractérisé en ce que**
le système de gestion de moteur (22) répond à une demande de couple et à un régime du moteur pour faire fonctionner sélectivement le moteur dans un mode d'une pluralité de modes d'exploitation, comprenant :
a) un mode à aspiration naturelle disponible à tout régime du moteur (33, 37, 38) dans lequel le compresseur d'air (10) est en fait désactivé et le système de gestion de moteur (22) commande le couple moteur en ajustant le réglage du papillon des gaz (17), et
b) un mode de couple amélioré disponible uniquement lorsque le régime du moteur est en dessous d'un régime de moteur prédéterminé N (37) et que la demande de couple moteur ne peut pas être satisfaite en utilisant une aspiration naturelle, dans lequel le réglage du papillon des gaz (17) est maintenu à un réglage maximum et le système de gestion du moteur (22) commande ledit moteur électrique (14) pour permettre une aspiration assistée à un niveau nécessaire au moteur pour obtenir le couple demandé, N étant au régime de couple moteur de pointe du moteur ou près de celui-ci (35) pour le moteur dans un mode à aspiration naturelle.

2. Moteur à combustion interne (1) selon la revendication 1, dans lequel le couple de pointe (40) avec une aspiration assistée est à la fois plus élevé et obtenu à un régime de moteur plus bas que le couple de pointe à aspiration naturelle (35).

3. Moteur à combustion interne selon la revendication 1 ou la revendication 2, dans lequel ledit régime de couple moteur de pointe se situe dans une moitié supérieure de la plage de régimes du moteur.

4. Moteur à combustion interne (1) selon l'une quelconque des revendications précédentes, dans lequel : la production du couple moteur dépend au moins en partie de la quantité de carburant délivrée aux chambres de combustion (2), un capteur (31) est agencé pour détecter la composition des gaz d'échappement des chambres de combustion (2), le système de gestion de moteur (22) est agencé pour commander le système de délivrance de carburant (8), et reçoit une sortie provenant du capteur (31) indicative de la composition du gaz d'échappement, le système de gestion de moteur (22) étant sensible à la composition des gaz d'échappement détectée pour commander la quantité d'air comprimé et/ou la quantité de carburant délivrées.

5. Moteur à combustion interne (1) selon l'une quelconque des revendications précédentes, dans lequel le moteur est un moteur à pistons alternatifs, et le régime de couple de pointe du moteur (35) est au moins d'environ 3 500 tr/mn.

6. Moteur à combustion interne (1) selon l'une quelconque des revendications précédentes, dans lequel, la capacité des chambres de combustion (2) est en dessous d'environ 1,8 litres.

7. Moteur à combustion interne (1) selon l'une quelconque des revendications précédentes, dans lequel le système de gestion de moteur (22) désactive progressivement l'utilisation du compresseur (10) dans la région des régimes du moteur auxquels un couple avec une aspiration naturelle seule présente une pointe.

8. Moteur à combustion interne (1) selon l'une quelconque des revendications précédentes, dans lequel le couple moteur maximum produit avec le compresseur (10) activé passe progressivement (34) dans la production de couple moteur maximum à aspiration naturelle vers des régimes plus élevés du moteur.

9. Moteur à combustion interne (1) selon l'une quelconque des revendications précédentes, dans lequel le moteur électrique est un moteur à réluctance commutée (14).

10. Moteur à combustion interne (1) selon l'une quelconque des revendications précédentes, dans lequel le moteur comprend une dérivation d'air (13) dans le compresseur (10) et la quantité d'air comprimé fournie aux chambres de combustion (2) est commandée au moins en partie en commandant la quantité d'air contournant le compresseur (10).

11. Moteur à combustion interne (1) selon l'une quelconque des revendications précédentes, dans lequel la quantité d'air comprimé fourni aux chambres de combustion (2) est commandée par l'intermédiaire de la quantité de puissance électrique fournie au moteur électrique (14).

12. Moteur à combustion interne (1) selon l'une quelconque des revendications précédentes, dans lequel le compresseur (10) comprend des aubes d'impulseur ajustables, les aubes d'impulseur étant ajustables pour maintenir l'efficacité du fonctionnement du compresseur dans différentes conditions de débit d'air.

13. Véhicule à moteur, comprenant une pédale d'accélérateur (18) pouvant être actionnée par le conducteur du véhicule, et un moteur à combustion interne (1), dans lequel le moteur à combustion interne (1) est selon l'une quelconque des revendications précédentes, la demande en couple moteur étant réglée au moins en partie par la position de la pédale d'accélérateur (18).

14. Procédé de mise en oeuvre d'un moteur à combustion interne, le moteur à combustion interne (1) comprenant une ou plusieurs chambres de combustion (2), un orifice d'entrée d'air (3) destiné à l'aspiration dans les chambres de combustion (2), un papillon des gaz (17) dans l'orifice d'entrée d'air (3) qui peut être réglé pour réguler l'aspiration des chambres de combustion (2), un système de délivrance de carburant (8) destiné à fournir du carburant aux chambres de combustion (2), un compresseur d'air (10) dans l'orifice d'entrée d'air (3) destiné à aider l'aspiration des chambres de combustion (2) et donc le couple moteur produit en comprimant de l'air dans l'orifice d'entrée d'air (3), un dispositif d'entraînement de compresseur (14) destiné à fournir de la puissance pour faire fonctionner le compresseur d'air (10), et un système de gestion de moteur (22) destiné à commander le couple moteur produit en réponse à une demande de couple moteur, le moteur étant réglé pour produire son couple de pointe avec une aspiration naturelle seule à un régime moteur de couple de pointe (35) qui est au-dessus d'un régime de ralenti et en dessous d'un régime nominal maximum du moteur, le procédé comprenant les étapes consistant à :
i) fournir un moteur électrique (14) pour entraîner le compresseur (10),
**caractérisé par**
ii) l'utilisation du système de gestion de moteur (22) pour faire fonctionner sélectivement le moteur dans un mode d'une pluralité de modes de fonctionnement en réponse à la demande de couple et au régime du moteur, comprenant :
a) un mode à aspiration naturelle disponible à tout régime du moteur dans lequel le compresseur d'air (10) est en fait désactivé et où le système de gestion de moteur (22) commande le couple moteur en ajustant le réglage du papillon des gaz (17), et
b) un mode à couple amélioré uniquement disponible lorsque le régime du moteur est en dessous d'un régime de moteur prédéterminé N et que la demande de couple moteur ne peut pas être satisfaite en utilisant une aspiration naturelle, dans lequel le réglage du papillon des gaz (17) est maintenu à un réglage maximum et où le système de gestion de moteur (22) commande ledit moteur électrique (14) pour procurer une aspiration assistée à un niveau nécessaire au moteur pour obtenir le couple demandé, N étant au régime moteur de couple moteur de pointe (35) ou proche de celui-ci, pour le moteur en mode à aspiration naturelle.
